# FASCICULE DE BREVET EUROPEEN

(11) **EP 1 297 275 B1**
(45) Date de publication et mention de la délivrance du brevet: **12.04.2006**
(21) Numéro de dépôt: 01984115.4
(22) Date de dépôt: 05.07.2001
(51) Int. Cl.: F16L 21/08, F16L 37/252

(54) **SYSTEME D'ASSEMBLAGE VERROUILLABLE ET DEVERROUILLABLE DE DEUX PIECES TUBULAIRES**
VERRIEGELBARES UND ENTRIEGELBARES VERBINDUNGSSYSTEM FÜR ZWEI ROHRSTÜCKE
ASSEMBLY SYSTEM FOR TWO TUBULAR PARTS CAPABLE OF BEING LOCKED AND UNLOCKED

(30) Priorité: 06.07.2000 FR 0008799
(43) Date de publication de la demande: 02.04.2003
(73) Titulaire: COMMISSARIAT A L'ENERGIE ATOMIQUE, 75752 Paris Cédex 15 (FR)
(72) Inventeur: RICARD, Joel, F-33600 Pessac (FR)
(74) Mandataire: Audier, Philippe André
(86) Numéro de dépôt international: PCT/FR2001/002156
(87) Numéro de publication internationale: WO 2002/002982

(56) Documents cités:
- EP-A- 0 770 809
- FR-A- 1 538 477
- US-A- 4 878 695
- US-A- 5 288 114

## Description

L'invention concerne, de manière générale, l'assemblage bout à bout de deux pièces tubulaires et, en particulier, des canalisations de grands diamètres.

Dans l'industrie, il existe plusieurs moyens conventionnels pour assembler bout à bout deux pièces tubulaires de manière efficace, dont les trois exemples suivants.

Un premier moyen consiste à utiliser une bride à l'extrémité de chacune des deux canalisations. La solidarisation s'effectue au moyen d'un système fileté, tel que des goujons ou boulons de serrage. Ce système, très utilisé, s'avère particulièrement robuste et ne met pas en jeu d'usinages difficiles. Par contre, il demande un temps de mise en oeuvre conséquent et est d'un encombrement important.

Un deuxième moyen consiste à utiliser les mêmes brides du système cité dans le paragraphe précédent, mais de les solidariser au moyen d'un collier extérieur. Ce système s'avère également robuste, mais réclame aussi un temps de mise en oeuvre conséquent. De plus, les usinages du collier sont tributaires des cotes des brides et doivent être très soignés. Enfin, son encombrement est important.

Un troisième système consiste à réaliser une liaison par filetage, c'est-à-dire de visser chacune des extrémités des canalisations à solidariser dans un unique manchon. Ce système s'avère également robuste, d'un encombrement assez faible. Il ne réclame pas d'usinages difficiles et est rapide à mettre en oeuvre. Par contre, sa démontabilité est très discutable.

Le but de l'invention est donc de remédier à ces inconvénients en proposant un système peu encombrant, de mise en oeuvre facile, robuste et ne réclamant pas d'usinages de grande précision.

D'autre part, le brevet US-4 878 695 décrit l'assemblage de deux pièces tubulaires mis bout à bout, de même diamètre. L'une des pièces tubulaires comprend une douille faisant saille et comportant une couronne radiale avec des dents. De façon correspondante, l'autre pièce tubulaire comprend une couronne radiale avec des dents dont les intervalles correspondent aux dents de la couronne radiale de l'autre pièce tubulaire. La fixation de ces deux pièces tubulaires l'une par rapport à l'autre s'effectue avec deux couronnes de serrage, dont une est fixée sur une des deux pièces tubulaires et dont l'autre peut être tournée autour de l'axe des pièces tubulaires. Cette protection, du fait de la présence de surfaces inclinées, permet le serrage des deux pièces tubulaires, l'une par rapport à l'autre.

A cet effet, l'objet principal de l'invention est un système d'assemblage verrouillable et déverrouillable de deux pièces tubulaires de même diamètre à assembler bout à bout selon la revendication 1.

Dans un mode de réalisation de l'invention, les coins possèdent chacun un moyen de liaison souple avec la couronne de verrouillage pour donner un degré de liberté aux surfaces inclinées de serrage des coins en rotation autour de l'axe des couronnes crénelées.

Dans ce cas, il est préférable que ces coins soient constitués chacun d'une pièce séparée de la couronne de verrouillage, les moyens de liaison souple étant constitués par une section rétrécie du coin entre la surface inclinée de serrage et une surface de poussée de ce même coin, devant recevoir, par l'intermédiaire d'un grain de poussée, la poussée de la couronne de verrouillage et délimitant ainsi un élément de souplesse sur laquelle se trouve la surface d'appui et un corps de coin.

Au moins une lumière de guidage dans le corps du coin peut compléter cette réalisation pour solidariser le coin avec la couronne de verrouillage, par l'intermédiaire d'un pion de guidage solidaire de la couronne de verrouillage, afin de guider le coin dans son mouvement relatif de glissement par rapport à la couronne de verrouillage.

Toujours dans ce cas, il est intéressant d'utiliser une butée de déverrouillage, solidaire de la couronne de verrouillage, pour prendre appui sur une surface opposée à la surface de poussée du coin correspondant, afin d'effectuer le déverrouillage de l'ensemble par rotation de la couronne de verrouillage dans le sens inverse à celui utilisé pour le verrouillage.

En vu de faciliter le positionnement relatif des deux pièces à assembler, il est intéressant d'utiliser une couronne de centrage dont le diamètre extérieur est juste inférieur au diamètre intérieur des couronnes crénelées et qui doit être placée à l'intérieur des deux couronnes crénelées. De plus, cette couronne reprend les efforts tranchants dans le cas de l'application de chargements mécaniques transversaux.

Il est possible d'utiliser au moins une vis de verrouillage traversant la couronne de centrage, les deux couronnes crénelées et la couronne de verrouillage pour verrouiller la fixation de l'ensemble.

L'invention et ses différentes caractéristiques techniques seront mieux comprises à la lecture de la description suivante, accompagnée de plusieurs figures représentant respectivement :
- figure 1, en vue éclatée, le système selon l'invention ;
- figure 2, en vue cavalière, les principaux éléments de l'invention avant l'assemblage, la couronne de verrouillage n'étant pas représentée complètement ;
- figure 3, en vue cavalière, les principaux éléments de l'invention, après l'assemblage, la couronne de verrouillage n'étant pas représentée complètement ;
- figure 4, un schéma partiel relatif aux coins utilisés dans le système selon l'invention ;
- figure 5, en vue cavalière, un détail d'un mode préféré de réalisation du système selon l'invention ; et
- figure 6, en coupe partielle, un autre détail du mode préféré du système selon l'invention.

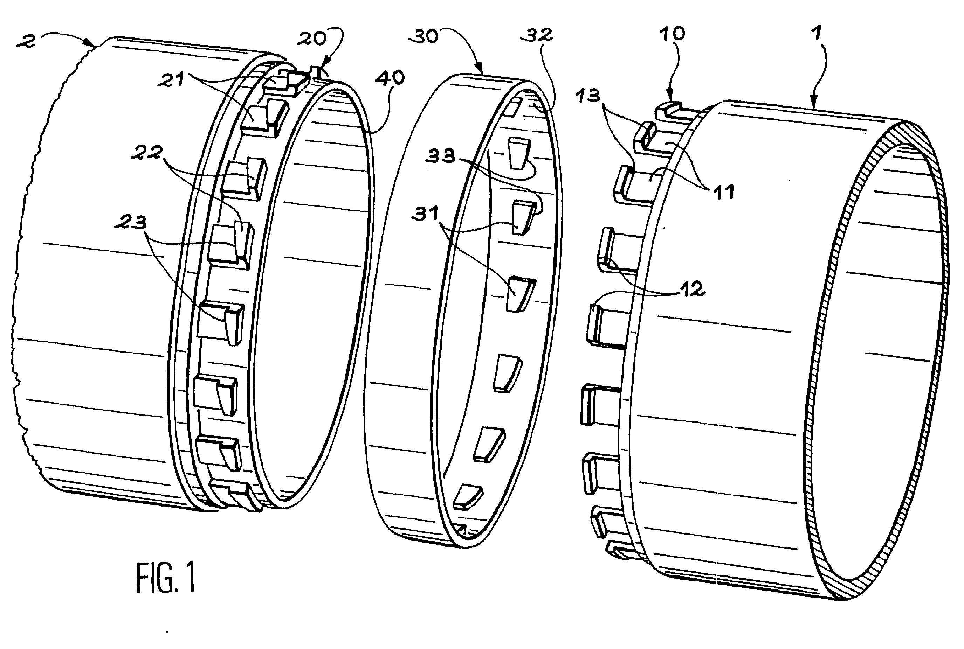

En référence à la figure 1, les deux pièces tubulaires 1 et 2, sensiblement de même diamètre, à assembler sont représentées équipées chacune d'une couronne crénelée respectivement 10 et 20. Dans cette réalisation, ces couronnes crénelées 10 et 20 font partie intégrante des deux pièces tubulaires 1 et 2. Ceci n'est qu'une réalisation possible, ces couronnes crénelées 10 et 20 pouvant être conçues séparément, en étant rapportées aux pièces tubulaires 1 et 2 et ensuite fixées sur ces dernières.

Ces deux ensembles sont représentés séparés par une couronne de verrouillage 30.

La couronne crénelée 10 de la première pièce tubulaire 1 est constituée d'un nombre déterminé N de dents 11 possédant chacune un épaulement droit 12 faisant saillie vers l'extérieur. Chacun de ces épaulements 12 possède une surface de serrage droite 13 perpendiculaire à l'axe général des pièces tubulaires 1 et 2 et des couronnes 10, 20 et 30.

De façon correspondante, la couronne crénelée 20 de la deuxième pièce tubulaire 2 possède un même nombre N de dents 21, équipée chacune à leur extrémité d'un épaulement radial incliné 22 et s'étendant vers l'extérieur, de manière analogue aux épaulements 12 de la première couronne crénelée 10. La seule différence est l'existence d'une surface de serrage 23 inclinée et constituant donc un tronçon de rampe hélicoïdale. Il faut remarquer que les dents 11 et 21 de chaque couronne crénelée 10 et 20 sont séparées les unes des autres, c'est-à-dire sur la même couronne, d'un espace au moins aussi large que la largeur des dents 11 et 21. De la sorte, les couronnes crénelées 10 et 20 peuvent s'emboîter l'une dans l'autre, les dents de l'une passant entre les dents de l'autre, le jeu existant étant essentiellement un jeu de montage.

Le troisième élément principal du système d'assemblage est donc la couronne de verrouillage 30, constituée d'un tronçon de tube d'un diamètre correspondant au diamètre extérieur des deux pièces tubulaires 1 et 2 à assembler, très légèrement supérieur au diamètre défini par les extrémités extérieures des épaulements 12 et 22 des deux couronnes crénelées 10 et 20. Cette couronne de verrouillage 30 doit pouvoir couvrir les deux couronnes crénelées 10 et 20 lors du montage. Elle est équipée, sur sa surface interne 32, d'un même nombre déterminé N de coins 31. Ces derniers ont une forme trapézoïdale et possèdent donc, entre autres, une surface de serrage inclinée 33 en forme de tronçon de rampe hélicoïdale. L'inclinaison de cette surface de serrage 33 correspond à l'inclinaison de la surface de serrage 23 des épaulements 22 de la deuxième couronne crénelée 20. Ils sont séparés les uns des autres par un même nombre d'espaces dont la largeur est au moins aussi grande ou légèrement supérieure à la largeur des dents 11 et 21 des deux couronnes crénelées 10 et 20. De préférence, les largeurs des motifs « dent-espace avec la dent suivante » des deux couronnes crénelées 10 et 20 ou du motif « coin-espace avec le coin-suivant » de la couronne de verrouillage 30 sont égales.

Dans la représentation de la figure 1, sur la deuxième pièce tubulaire 2 est montée une pièce de guidage 40. Cette dernière est constituée d'un tronçon de cylindre dont le diamètre externe correspond au diamètre interne des deux pièces tubulaires 1 et 2. Elle est insérée, au préalable, dans l'une des deux pièces tubulaires 1 ou 2 pour favoriser le positionnement de ces deux pièces tubulaires l'une par rapport à l'autre, et éventuellement assurer la reprise des efforts tranchants dans le cas de l'application d'un chargement mécanique transversal.

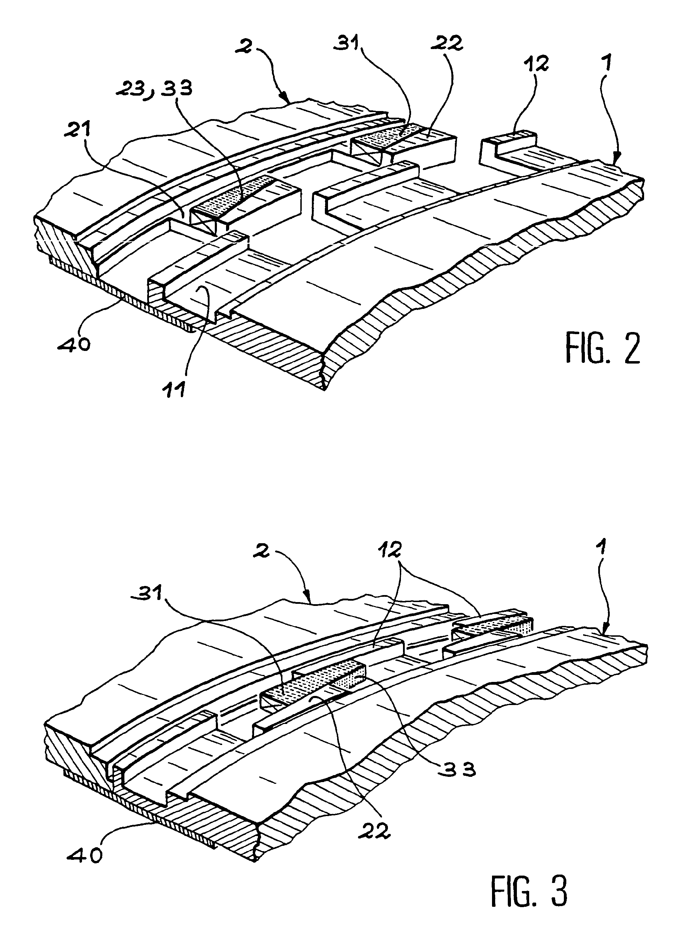

La figure 2 illustre la phase de positionnement des deux pièces tubulaires 1 et 2, et surtout des dents 11 et 21 des deux couronnes crénelées de ces deux pièces tubulaires 1 et 2. Bien entendu, les dents 11 de la première couronne crénelée sont positionnées entre les dents 21 de la deuxième couronne crénelée, de manière à pouvoir s'imbriquer les unes dans les autres. La couronne de positionnement 40, placée à l'intérieur de la deuxième pièce tubulaire 2, permet aux dents 11 de la première couronne crénelée de se positionner pour réaliser l'assemblage.

Sur cette même figure 2, ont été représentés les coins 31 de la couronne de verrouillage, référencée 30 sur la figure 1. Ceux-ci sont placés chacun contre une dent 21 de la deuxième couronne crénelée, derrière l'épaulement 22 de la dent correspondante. Ainsi, leurs deux surfaces de serrage respectives 23 et 33 sont l'une contre l'autre.

La figure 3 visualise l'ensemble en position assemblée et verrouillée. A cet effet, des chanfreins sont prévus aux extrémités de chaque dent 11 et 21 pour faciliter le rapprochement des deux couronnes crénelées 10 et 20. Les dents 11 et 21 ont donc pénétré les unes entre les autres, les épaulements 12 ou 22 de chacune venant en appui contre la pièce tubulaire qui leur est opposée.

Par ailleurs, chaque coin 31 a subi un mouvement hélicoïdal entre les épaulements respectifs 12 et 22 des deux couronnes crénelées. En d'autres termes, la couronne de verrouillage a effectué une rotation autour de l'axe des pièces tubulaires 1 et 2.

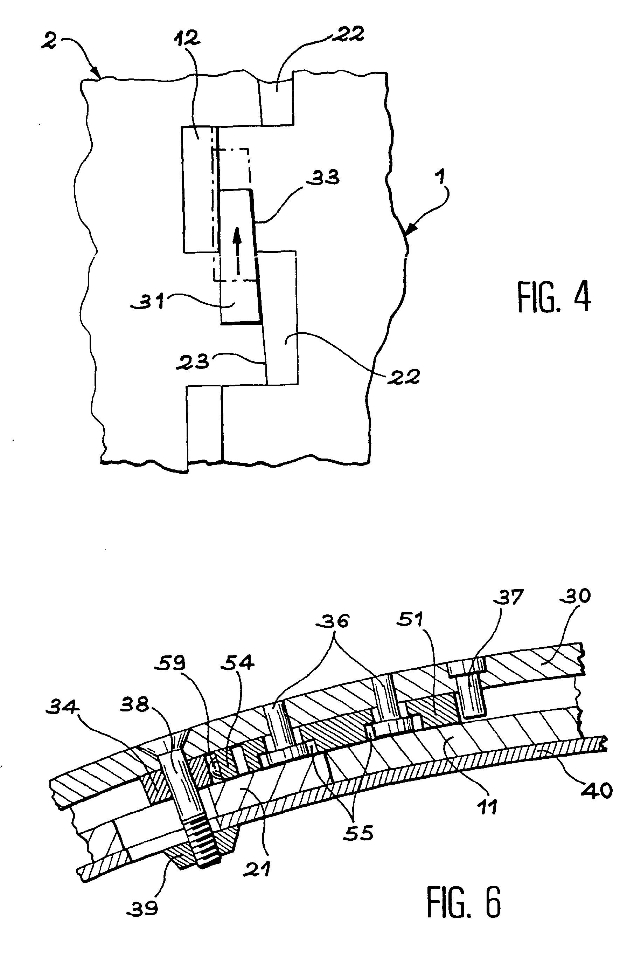

Ce mouvement est mieux représenté à la figure 4. En effet, le mouvement hélicoïdal évoqué, est représenté par la flèche. La position, représentée en traits mixtes, est celle du coin 31 lorsque l'assemblage est effectué, c'est-à-dire que les pièces 1 et 2 sont fixées l'une à l'autre. Dans cette deuxième position, les surfaces inclinées de serrage respectives 23 et 33 des épaulements inclinés 22 et du coin 31 ont glissé l'une contre l'autre, en allant de la hauteur la plus petite vers la hauteur la plus grande de la forme de trapèze qui est celle de ces deux éléments. De ce fait, le coin 31 a tendance à écarter les épaulements 12 et 22 les uns des autres et ainsi à rapprocher les deux pièces tubulaires 1 et 2 pour qu'elles soient collées l'une contre l'autre. En d'autres termes, le mouvement hélicoïdal du coin 31, provoqué par la rotation de la pièce de verrouillage 30 sur laquelle sont placés les coins 31, provoque un déplacement complémentaire parallèle à l'axe des pièces tubulaires 1 et 2, comme le représente le petit décalage entre les deux positions du coin 31 sur la figure 4. Bien entendu, la forme et en particulier les deux hauteurs des coins 31 sont calculés pour contribuer à ce serrage.

Pour que cette fixation se fasse par l'intermédiaire du plus grand nombre de dents et de coins possibles, les usinages des deux couronnes dentelées et des coins doivent être très précis et identiques pour que le plus grand nombre d'épaulements soit en appui. Toutefois, l'usinage ne pouvant pas être parfait, on suppose que de nombreuses surfaces inclinées de serrage ne seront pas en appui les unes contres les autres, alors que d'autres le seront déjà lors de la rotation de la couronne de verrouillage. Un aspect de l'invention est donc de permettre à tous les coins d'être en appui sur leur épaulement respectif. On utilise, à cet effet, des moyens de liaison souple entre les coins 31 et la couronne de verrouillage 30.

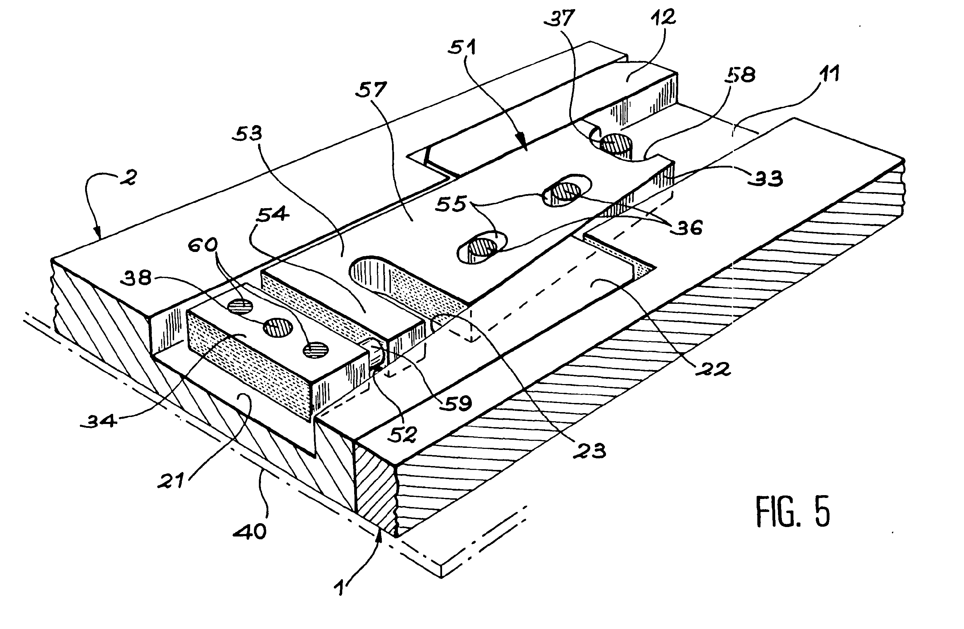

La figure 5 permet de montrer un détail de réalisation d'une version préférentielle de l'invention. Les moyens de liaison souple permettent de laisser un degré de liberté, dans une faible proportion, dans le sens du mouvement des coins, le long des dents 11 et 21, c'est-à-dire autour de l'axe des pièces à assembler 1 et 2. Sur cette figure 5 et pour des raisons de clarté, la couronne de verrouillage n'a été représentée que par un parmi les N plots de poussée 34 qui est solidaire de cette couronne de verrouillage. Par contre, le coin 51 est mobile par rapport à la couronne de verrouillage. Il peut simplement recevoir, par une surface d'appui 52 et par l'intermédiaire du plot de poussée 34, la poussée de la part de la couronne de verrouillage. Un grain de poussée 59 permet de ne recevoir cette poussée qu'à l'extrémité d'une partie de souplesse 54 du coin 51, défini dans ce dernier par une section rétrécie 53. Cette dernière délimite donc une partie de souplesse 54 et un corps de coin 57.

On peut comprendre ainsi que, lors de la poussée provoquée par le plot de poussée 34 de la couronne de verrouillage sur la surface de poussée 52 du coin 51, la partie de souplesse 54 puisse légèrement fléchir sous la résistance à l'avancement du coin 51 dont la surface de serrage 33 vient prendre appui et s'arcquebouter sur la surface de serrage 23 de l'épaulement incliné correspondant. Ainsi, le premier coin 51, dont la progression se verra stoppée par le frottement et le blocage définitifs des surfaces de serrage 13 et 23 pourra, par la souplesse de sa partie de souplesse 54, permettre la progression des autres plots de poussée 34, dans le but, pour un très grand nombre de coins 51, de venir eux-mêmes en blocage.

Sur la figure 5 sont figurés également deux pions de guidage 36 solidaires de la couronne de verrouillage et par rapport auxquels le coin 51 peut se translater, grâce à deux lumières correspondantes 55. Une butée de déverrouillage 37, solidaire de la couronne de verrouillage, est prévue pour prendre appui sur une surface 58 opposée à la surface de poussée 52 du coin 51. Ainsi, lors d'une rotation de la couronne de verrouillage, en sens inverse de celui utilisé pour le verrouillage, chaque coin 51 pourra être débloqué par la butée correspondante 37.

La figure 6 permet de voir comment s'étagent les différents éléments entrant en jeu dans ce système au niveau d'un coin 51. On retrouve sur cette figure 6 tous les éléments de la figure 5. Chacun des pions de guidage 36 sont fixés dans la couronne de verrouillage 30 et logés chacun dans la lumière 55 correspondante du coin 51. Le grain de poussée 59 reçoit la poussée de la part du plot de poussée 34, lui-même solidarisé à la couronne de verrouillage 30 par l'intermédiaire de deux vis 60. Une vis 38 est vissée dans un écrou 39 prenant appui sur la couronne de centrage 40, à l'intérieur de l'ensemble. Ainsi, le serrage complet de la vis 38 permet le pincement de la couronne de centrage 40, des dents 11 et 21 des couronnes crénelées, des coins 51 et de la couronne de verrouillage 30. Ainsi, il est possible de verrouiller la fixation des deux pièces tubulaires 1 et 2 à joindre. Il est préférable de prévoir plusieurs vis de serrage 38 sur toute la périphérie. Un tel système trouve son application dans la jonction de pièces tubulaires de diamètres supérieurs ou égaux à 200 mm. Le nombre de dents utilisées et leur géométrie dépendent directement des efforts subis.

Il s'avère intéressant d'utiliser une inclinaison pour les surfaces inclinées de serrage 23 et 33 des épaulements inclinés 21 et des coins 31 et 51 de l'ordre de 4,5°. En effet, les pièces tubulaires à joindre sont le plus souvent sollicitées mécaniquement dans le sens transversal. La géométrie du système permet donc de transmettre la majorité des efforts dans l'axe longitudinal des pièces.

## Revendications

1. Système d'assemblage verrouillable et déverrouillable de deux pièces tubulaires (1, 2) de même diamètre, à assembler bout à bout, le système comprenant :
- une première couronne crénelée (10), fixable sur l'extrémité d'une première des deux pièces tubulaires (1) et constituée d'un nombre déterminé N de dents (11) dont les extrémités sont équipées chacune d'un épaulement radial droit (12), orienté vers l'extérieur ;
- une deuxième couronne crénelée (20) fixable à l'extrémité de la deuxième des deux pièces tubulaires (2) constituée du même nombre déterminé N de dents (21) dont les extrémités sont équipées chacune d'un épaulement radial incliné (22) présentant une surface inclinée de serrage (23) constituant chacun un tronçon de rampe hélicoïdale orienté vers l'extérieur, les dents (21) de cette deuxième couronne crénelée (20) étant séparées les unes des autres par un espace supérieur ou égal à la largeur des dents (11) de la première couronne crénelée (10), les dents (11) de la première couronne crénelée (10) étant séparées chacune les unes des autres par un espace supérieur ou égal à la largeur des dents (21) de la deuxième couronne crénelée (20) ; et
- une couronne de verrouillage (30) constituée par un tronçon de tube de diamètre intérieur supérieur au diamètre délimité extérieurement par les épaulements (12, 22) des deux couronnes crénelées (10, 20) et possédant un même nombre déterminé N de coins (31, 51) présentant chacun une surface inclinée de serrage (33) complémentaire de la surface de serrage (23) des épaulements inclinés (22), c'est-à-dire de même pente que celle de la surface de serrage (23) des épaulements (22) des dents (21) de la deuxième couronne (20) et espacés d'une distance supérieure ou égale à la largeur des dents (21) de la deuxième couronne crénelée (20), de manière à pouvoir venir s'insérer dans et sur les couronnes crénelées (10, 20), la dimension maximale des coins (31, 51) de la couronne de verrouillage (30) dans la direction longitudinale de l'assemblage étant supérieure à la plus courte distance entre les épaulements (12, 22) des dents (11, 21) intercalées de manière à faire pénétrer par rotation autour de l'axe des couronnes crénelées (10, 20), les coins entre les épaulements (12, 22) respectifs des dents (11, 21) des deux couronnes crénelées (10, 20), jusqu'à blocage de l'ensemble.

2. Système d'assemblage selon la revendication 1, **caractérisé en ce que** les coins (51) possèdent chacun un moyen de liaison souple avec la couronne de verrouillage (30) pour donner un degré de liberté à chaque surface de serrage (13, 23) des coins (51) en rotation autour de l'axe des couronnes crénelées.

3. Système d'assemblage selon la revendication 2, **caractérisé en ce que** les coins (51) sont constitués chacun par une pièce séparée de la couronne de verrouillage (30), le moyen de liaison souple étant constitué par une section rétrécie (53) du coin (51) placé entre la surface inclinée de serrage (33) du coin (51) et une surface de poussée (52) du même coin (51) et pouvant recevoir la poussée, par l'intermédiaire d'un grain de poussée (59), d'un plot de poussée (34) actionné par la couronne de verrouillage (30), délimitant ainsi dans chaque coin (51) un élément de souplesse (54) sur laquelle se trouve la surface d'appui (52) et un corps (57) de coin (51).

4. Système d'assemblage selon la revendication 3, **caractérisé en ce qu'**il comprend au moins une lumière (55) pratiquée dans le corps (57) du coin (51) permettant un mouvement de rotation du coin (51) par l'intermédiaire d'un pion de guidage (36) solidaire de la couronne de verrouillage (30) pour guider le coin (51) dans un mouvement relatif de glissement par rapport à la couronne de verrouillage (30).

5. Système d'assemblage selon la revendication 1, **caractérisé en ce qu'**il utilise une couronne de centrage (40) de diamètre intérieur inférieur ou égal au diamètre inférieur des couronnes crénelées (10, 20) et placée à l'intérieur de ces dernières.

6. Système d'assemblage selon la revendication 3, **caractérisé en ce qu'**il comprend au moins une butée de déverrouillage (37) solidaire de la couronne de verrouillage (30) pour prendre appui sur une surface opposée (58) à la surface de poussée (52) du coin (50).

## Patentansprüche

1. Verriegelbares und entriegelbares Verbindungssystem für eine End-zu-Endmontage zweier Rohrstücke (1, 2) desselben Durchmessers, umfassend:
- einen ersten Zahnkranz (10), fixierbar am Ende eines ersten der beiden Rohrstücke (1) und gebildet durch eine bestimmte Anzahl N von Zähnen, deren Enden jeweils eine nach außen gerichtete gerade radiale Schulter (12) aufweisen;
- einen zweiten Zahnkranz (20), fixierbar am Ende des zweiten der beiden Rohrstücke (2), gebildet durch dieselbe bestimmte Anzahl N von Zähnen (21), deren Enden jeweils eine schräge radiale Schulter (22) mit einer schrägen Klemmfläche (23) aufweisen, von denen jede ein Teilstück einer nach außen gerichteten spiralförmigen Rampe bildet, wobei die Zähne (21) dieses zweiten Zahnkranzes (20) durch einen Abstand voneinander getrennt sind, der größer als oder gleich der Breite der Zähne (11) des ersten Zahnkranzes (10) ist, und die Zähne (11) dieses ersten Zahnkranzes (10) durch einen Abstand voneinander getrennt sind, der größer oder gleich der Breite der Zähne (21) des zweiten Zahnkranzes (20) ist; und
- einen Verriegelungskranz (30), gebildet durch ein Rohrstück, dessen Innendurchmesser größer ist als der durch die Schultern (12, 22) begrenzte Außendurchmesser der beiden Zahnkränze (10, 20), der eine selbe bestimmte Anzahl N von Keilen (31, 51) umfasst, jeder versehen mit einer zu der Klemmfläche (23) der schrägen Schultern (22) komplementären Fläche, das heißt mit derselben Neigung wie die Klemmfläche (23) der Schultern (22) der Zähne (21) des zweiten Kranzes (20) und mit einem Abstand größer oder gleich der Breite der Zähne (21) des zweiten Zahnkranzes (20), so dass sie in die Zahnkränze (10, 20) eingreifen können, wobei die maximale Ausdehnung der Keile (31, 51) des Verriegelungskranzes (30) in der Längsrichtung der Verbindung größer ist als der kürzeste Abstand zwischen den Schultern (12, 22) der dazwischen befindlichen Zähne (11, 21), so dass eine Drehung um die Achse der Zahnkränze (10, 20) ein Eindringen der Keile zwischen die jeweiligen Schultern (12, 22) der Zähne (11, 21) der beiden Zahnkränze (10, 20) bewirkt, bis zur Blockierung des Systems.

2. Verbindungssystem nach Anspruch 1, **dadurch gekennzeichnet, dass** jeder der Keile (51) eine nachgiebige Verbindungseinrichtung mit dem Verriegelungskranz (30) besitzt, um jeder Klemmfläche (13, 23) der Keile (51) einen Rotations-Freiheitsgrad um die Achse der Zahnkränze herum zu verleihen.

3. Verbindungssystem nach Anspruch 2, **dadurch gekennzeichnet, dass** die Keile (51) durch ein von dem Verriegelungskranz (30) getrenntes Stück gebildet werden, wobei die nachgiebige Verbindungseinrichtung gebildet wird durch einen verengten Querschnitt (53) des Keils (51) - zwischen der schrägen Klemmfläche (33) des Keils (51) und einer Druckaufnahmefläche (52) desselben Keils (51), auf die der Druck über einem Ansatz (59) eines Druckelements (34) wirken kann, das durch den Verriegelungskranz (30) betätigt wird - der bei jedem Keil (51) ein Nachgiebigkeitsstück (54), an dem sich die Abstützfläche (52) befindet, und ein Hauptstück (57) des Keils (51) abgrenzt.

4. Verbindungssystem nach Anspruch 3, **dadurch gekennzeichnet, dass** es wenigstens ein in dem Hauptstück (57) des Keils (51) vorgesehenes Langloch (55) umfasst, das eine Drehbewegung des Keils (51) ermöglicht, betätigt durch einen fest mit dem Verriegelungskranz (30) verbundenen Führungsstift (36), der den Keil (51) bei einer in Bezug auf den Verriegelungskranz (30) relativen Gleitbewegung führt.

5. Verbindungssystem nach Anspruch 1, **dadurch gekennzeichnet, dass** es einen Zentrierungskranz (40) benutzt, mit einem Innendurchmesser kleiner oder gleich dem Innendurchmesser der Zahnkränze (10, 20) und im Innem dieser letzteren angeordnet.

6. Verbindungssystem nach Anspruch 3, **dadurch gekennzeichnet, dass** es wenigstens einen Entriegelungsanschlag (37) umfasst, fest verbunden mit der Verriegelungskrone (30), zur Abstützung auf einer der Druckaufnahmefläche (52) des Keils (50) entgegengesetzten Fläche (58).

## Claims

1. Lockable and releasable assembly system for two tubular parts (1, 2) of the same diameter, for end to end assembly, the system comprising:
- a first toothed crown (10), fixable to the end of the first of the two tubular parts (1), and formed by a determined number N of teeth (11), whose ends each have a straight radial shoulder (12), facing outwards;
- a second toothed crown (20), fixable to the end of the second of the two tubular parts (2), formed by the same number N of teeth (21), whose ends each have an angled radial shoulder (22), with an angled clamping face (23), each forming an outward facing helicoidal ramp section, the teeth (21) of this second toothed crown (20) being separated by a distance equal to or greater than the width of the teeth (11) of the first toothed crown (10), the teeth (11) of the first toothed crown (10) each being separated from one another by a distance equal to or greater than the width of the teeth (21) of the second toothed crown (20); and
- a locking ring (30) composed of a tube section whose internal diameter is bigger than the external diameter defined by the shoulders (12, 22) of the two toothed crowns (10, 20), and each having a same determined number N of teeth (31, 51) and an angled clamping face (33) that is complementary to the clamping face (23) of the angled shoulders (22), which is to say at the same angle as the clamping face (23) of the shoulders (22) of the teeth (21) of the second toothed crown (20) and at a distance equal to or greater than the width of the teeth (21) of the second toothed crown (20), so that they can mesh between and on the toothed crowns (10, 20), the maximum dimension of the teeth (31, 51) of the locking ring (30) in the longitudinal direction of the assembly exceeding the shortest distance between the shoulders (12, 22) of the intercalated teeth (11, 21) in such a way as to bring about penetration by rotation about the axis of the toothed crowns (10, 20) of the teeth between the respective shoulders (12, 22) of the teeth (11, 21) of the two toothed rings (10, 20) until the assembly is locked.

2. Assembly system of claim 1, **characterized in that** the teeth (51) each have a flexible attachment with the locking ring (30) to give a degree of freedom to each clamping face (13, 23) of the teeth (51) rotating around the axis of the toothed crowns.

3. Assembly system of claim 2, **characterized in that** the teeth (51) are each formed by a part separate from the locking ring (30), the flexible attachment being formed by a reduced section (53) of the tooth (51) positioned between the angled clamping face (33) of the tooth (51) and a thrust face (52) of the same tooth (51) that can receive the thrust via a thrust pad (59), a thrust pin (34) actuated by the locking ring (30), thus defining for each tooth (51) a flexible attachment (54) on which the thrust face (52) and a tooth (51) body (57) are located.

4. Assembly system of claim 3, **characterized in that** it includes at least one slot (55) in the body (57) of the tooth (51), that permits a rotational movement of the tooth (51) via a guide pin (36) that is part of the locking ring (30) to guide the tooth (51) in a relative sliding movement with respect to the locking ring (30).

5. Assembly system of claim 1, **characterized in that** it uses a centring ring (40) whose internal diameter is smaller than or equal to the internal diameter of the toothed crowns (10, 20) and which is positioned inside the said crowns.

6. Assembly system of claim 3, **characterized in that** it comprises at least one release stop (37) that is fastened to the locking ring (30) to bear onto a face (58) that is opposite the thrust face (52) of the tooth (51).
